# EUROPEAN PATENT APPLICATION

(11) **EP 4 592 030 A2**
(43) Date of publication of application: **30.07.2025**
(21) Application number: 25154060.5
(22) Date of filing: 27.01.2025
(51) Int. Cl.: B25D 11/04, B25D 16/00, B25D 17/06

(54) **RECIPROCATING IMPACT TOOL WITH MOTOR CONTROL**

(30) Priority: 25.01.2024 US 202463624981 P
(71) Applicant: Milwaukee Electric Tool Corporation, Brookfield, WI 53005-2550 (US)
(72) Inventor: Vaculik, Tanner J., Brown Deer, WI, 53209 (US); Khamidly, Umid, Brookfield, WI, 53005 (US); Schultz, Kyle W., Mequon, WI, 53072 (US); Mack, Ryan, Menomonee Falls, WI, 53051 (US); Phipps, Hannah E., Greenwood, IN, 46142 (US)
(74) Representative: Grünecker Patent- und Rechtsanwälte PartG mbB

(57) **Abstract**

A power tool (100) that includes a housing (104), an electric motor (108), an input device (516), a reciprocation drive assembly (113), a striker (164), an anvil (172), and an electronic controller (502) is provided. The electronic controller can control the electric motor based on a state of the input device. The electronic controller can receive a first signal from the input device, the first signal indicating a first constant speed of the electric motor, and, in response to the first signal, set an operational speed of the electric motor to the first constant speed. The electronic controller can further receive a second signal from the input device, the second signal indicating a second constant speed of the electric motor that is greater than the first constant speed, and, in response to the second signal, set the operational speed of the electric motor to the second constant speed.

## Description

### CROSS-REFERENCE TO RELATED APPLICATIONS

This application claims the benefit of the U.S. Provisional Patent Application No. 63/624,981, filed January 25, 2024, which is hereby incorporated by reference in its entirety.

### BACKGROUND

A power tool (e.g., a chisel hammer, a rotary hammer, an air hammer, a drill, air chisel, etc.) can be used to drill or impact a workpiece with a bit (e.g., to remove material from the workpiece). An output unit of the power tool can include an impact mechanism that provides power to translate the bit in an axial (i.e., linear) direction. For example, in some applications, the impact mechanism can include a striker that translates in the axial direction to deliver an impact to a tool bit (e.g., via an anvil).

### SUMMARY OF THE DISCLOSURE

According to some aspects of the disclosure a power tool adapted to impart axial impacts to a tool bit can include a housing, an electric motor supported in the housing, an input device, a reciprocation drive assembly coupled to the electric motor and configured to convert torque from the electric motor to reciprocating motion of a drive piston for reciprocation along a reciprocation axis, a striker that reciprocates in response to reciprocation of the drive piston, an anvil positioned between the striker and the tool bit, and an electronic controller operably coupled to the electric motor and the input device. The anvil can be configured to transmit axial impacts from the striker to the tool bit. The electronic controller can be operable to receive a first signal from the input device and, in response to the first signal, set an operational speed of the electric motor to the first constant speed. The first signal can indicate a first constant speed of the electric motor. The electronic controller can further receive a second signal from the input device, and, in response to the second signal, set the operational speed of the electric motor to the second constant speed. The second signal can indicate a second constant speed of the electric motor that is greater than the first constant speed.

In some aspects, the power tool can include a speed sensor that is configured to detect the operational speed of the electric motor. The electronic controller can be operable to receive inputs from the speed sensor and, in response to the inputs, adjust the operational speed to maintain the first constant speed.

In some aspects, the input device can include a trigger that is supported by the housing.

In some aspects, the input device can include a mode selector that is supported by the housing. The power tool can include a trigger that is supported by the housing.

In some aspects, in response to a start signal from the trigger, the electronic controller can be configured to operate the electric motor at the first constant speed and at the second constant speed.

In some aspects, the electronic controller can be configured to receive a first mode selection from the mode selector. According to the first mode selection, the electronic controller can maintain a constant speed of the electric motor in response to a start signal from the trigger. The electronic controller can receive a second mode selection from the mode selector. According to the second mode selection, the electronic controller can repeatedly cycle a motor speed of the electric motor between the constant speed and a stopped state in response to the start signal from the trigger.

In some aspects, the input device can include a mode selector that is supported by the housing. The electronic controller can be configured to receive a first acceleration selection from the mode selector and, in response to the first acceleration selection, set an operational acceleration rate of the electric motor to the first acceleration rate. The first acceleration selection can indicate a first acceleration rate of the electric motor. The operational acceleration rate can correspond to a time period during which the electric motor is accelerated from a stopped state to a desired constant speed. The electronic controller can be configured to receive a second acceleration selection from the mode selector and, in response to the second acceleration selection, set the operational acceleration rate of the electric motor to the second acceleration rate. The second acceleration selection can indicate a second acceleration rate of the electric motor that is greater than the first acceleration rate.

According to another aspect of the present disclosure, a power tool that is adapted to impart axial impacts to a tool bit can include a housing, an electric motor supported in the housing, a mode selector, a reciprocation drive assembly coupled to the electric motor and configured to convert torque from the electric motor to reciprocating motion of a drive piston for reciprocation along a reciprocation axis, a striker that reciprocates in response to reciprocation of the drive piston, an anvil positioned between the striker and the tool bit, and an electronic controller operably coupled to the electric motor and the mode selector. The anvil can be configured to transmit axial impacts from the striker to the tool bit. The electronic controller can be operable to receive a first acceleration selection from the mode selector and, in response to the first acceleration selection, set an operational acceleration rate of the electric motor to the first acceleration rate. The first acceleration selection can indicate a first acceleration rate of the electric motor. The operational acceleration rate can correspond to a time period during which the electric motor is accelerated from a stopped state to a desired constant speed. The electronic controller can receive a second acceleration selection from the mode selector and, in response to the second acceleration selection, set the operational acceleration rate of the electric motor to the second acceleration rate. The second acceleration selection can indicate a second acceleration rate of the electric motor that is greater than the first acceleration rate.

In some aspects, the power tool can include a speed sensor that is configured to detect an operational speed of the electric motor. The electronic controller can be operable to receive inputs from the speed sensor, and, in response to the inputs, adjust the operational speed to maintain the desired constant speed.

In some aspects, the power tool can include a trigger that is supported by the housing.

In some aspects, the electronic controller can be configured to receive a first signal from one of the mode selector and the trigger and, in response to the first signal, set an operational speed of the electric motor to the first constant speed. The first signal can indicate a first constant speed of the electric motor. The electronic controller can further receive a second signal from one of the mode selector and the trigger and, in response to the second signal, set the operational speed of the electric motor to the second constant speed. The second signal can indicate a second constant speed of the electric motor that is greater than the first constant speed.

In some aspects, the electronic controller can be further configured to receive a first mode selection from the mode selector and, according to the first mode selection, maintain a constant speed of the electric motor in response to a start signal from the trigger. The electronic controller can further receive a second mode selection from the mode selector and, according to the second mode selection, repeatedly cycle a motor speed of the electric motor between the constant speed and a stopped state in response to the start signal from the trigger.

In some aspects, the mode selector can be supported by the housing.

In some aspects, the anvil can define an opening and an inner bore that communicates with the opening. The inner bore can at least partially receive a shank of the tool bit.

According to yet another aspect of the present disclosure, a power tool adapted to impart axial impacts to a tool bit can include a housing, an electric motor supported in the housing, a mode selector, a trigger, a reciprocation drive assembly coupled to the electric motor and configured to convert torque from the electric motor to reciprocating motion of a drive piston for reciprocation along a reciprocation axis, a striker that reciprocates in response to reciprocation of the drive piston, an anvil positioned between the striker and the tool bit, and an electronic controller operably coupled to the electric motor, the mode selector, and the trigger. The anvil can be configured to transmit axial impacts from the striker to the tool bit. The electronic controller can be operable to receive a first mode selection from the mode selector and, according to the first mode selection, maintain a constant speed of the electric motor in response to a start signal from the trigger. The electronic controller can further receive a second mode selection from the mode selector and, according to the second mode selection, repeatedly cycle a motor speed of the electric motor between the constant speed and a stopped state in response to the start signal from the trigger.

In some aspects, the power tool can include a speed sensor that is configured to detect an operational speed of the electric motor. The electronic controller can be operable to receive inputs from the speed sensor and, in response to the inputs, adjust the operational speed to maintain the constant speed.

In some aspects, the electronic controller can be further configured to receive a first signal from one of the mode selector and the trigger and, in response to the first signal, set an operational speed of the electric motor to the first constant speed. The first signal can indicate a first constant speed of the electric motor. The electronic controller can receive a second signal from one of the mode selector and the trigger and, in response to the second signal, set the operational speed of the electric motor to the second constant speed. The second signal can indicate a second constant speed of the electric motor that is greater than the first constant speed.

In some aspects, the electronic controller can be further configured to receive a first acceleration selection from the mode selector and, in response to the first acceleration selection, set an operational acceleration rate of the electric motor to the first acceleration rate. The first acceleration selection can indicate a first acceleration rate of the electric motor. The operational acceleration rate can correspond to a time period during which the electric motor is accelerated from a stopped state to a desired constant speed. The electronic controller can receive a second acceleration selection from the mode selector. The second acceleration selection can indicate a second acceleration rate of the electric motor that is greater than the first acceleration rate.

In some aspects, the mode selector can be supported by the housing.

In some aspects, the anvil can define an opening and an inner bore that communicates with the opening. The inner bore can at least partially receive a shank of the tool bit.

This Summary and the Abstract are provided to introduce a selection of concepts in a simplified form that can be further described below in the Detailed Description. This Summary and the Abstract are not intended to identify key features or essential features of the claimed subject matter, nor are they intended to be used as an aid in determining the scope of the claimed subject matter.

### BRIEF DESCRIPTION OF THE DRAWINGS

The following drawings are provided to help illustrate various features of non-limiting examples of the disclosure and are not intended to limit the scope of the disclosure or exclude alternative implementations.
FIG. 1 is an axonometric view of a power tool in accordance with aspects of the disclosure.
FIG. 2 is a partial cross-sectional view of an output assembly of the power tool of FIG. 1, taken along line 2-2 of FIG. 1.
FIG. 3 is a partial cross-sectional view of the output assembly of the power tool of FIG. 1, taken along line 3-3 of FIG. 1.
FIG. 4 is a detail view of the area taken about line 4-4 of FIG. 2, showing details of an impact mechanism of the output assembly of the power tool of FIG. 1.
FIG. 5 is a cross-sectional view of a drive reciprocation drive assembly of the output assembly of the power tool of FIG. 1, taken along line 5-5 of FIG. 1, showing details of a drive piston at a retracted position.
FIG. 6 is a schematic diagram of the power tool of FIG. 1.
FIG. 7 is another schematic diagram of the power tool of FIG. 1.
FIG. 8 is a plot of a speed-time curve for an example power tool, illustrating a first operational speed associated with a first mode and a second operational speed associated with a second mode.
FIG. 9 is a plot of a speed-time curve for an example power tool, illustrating a first ramp-up time T₁.
FIG. 10 is a plot of a speed-time curve for an example power tool, illustrating a second ramp-up time T₂.
FIG. 11 is a plot of a speed-time curve for an example power tool in a first operational mode.
FIG. 12 is a plot of a speed-time curve for an example power tool in a second operational mode.

Before any embodiments of the disclosure are explained in detail, it is to be understood that the disclosure is not limited in its application to the details of construction and the arrangement of components set forth in the following description or illustrated in the following drawings. The disclosure is capable of other embodiments and of being practiced or of being carried out in various ways. Also, it is to be understood that the phraseology and terminology used herein is for the purpose of description and should not be regarded as limiting.

### DETAILED DESCRIPTION

The following discussion is presented to enable a person skilled in the art to make and use embodiments of the disclosed technology. Given the benefit of this disclosure, various modifications to the illustrated embodiments will be readily apparent to those skilled in the art, and the principles herein can be applied to other embodiments and applications without departing from embodiments of the disclosed technology. Thus, embodiments of the disclosed technology are not intended to be limited to embodiments shown but are to be accorded the widest scope consistent with the principles and features disclosed herein.

The following detailed description is to be read with reference to the figures, in which like elements in different figures have like reference numerals. The figures, which are not necessarily to scale, depict selected embodiments and are not intended to limit the scope of embodiments of the disclosed technology. Skilled artisans will recognize the examples provided herein have many useful alternatives and fall within the scope of embodiments of the disclosed technology.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

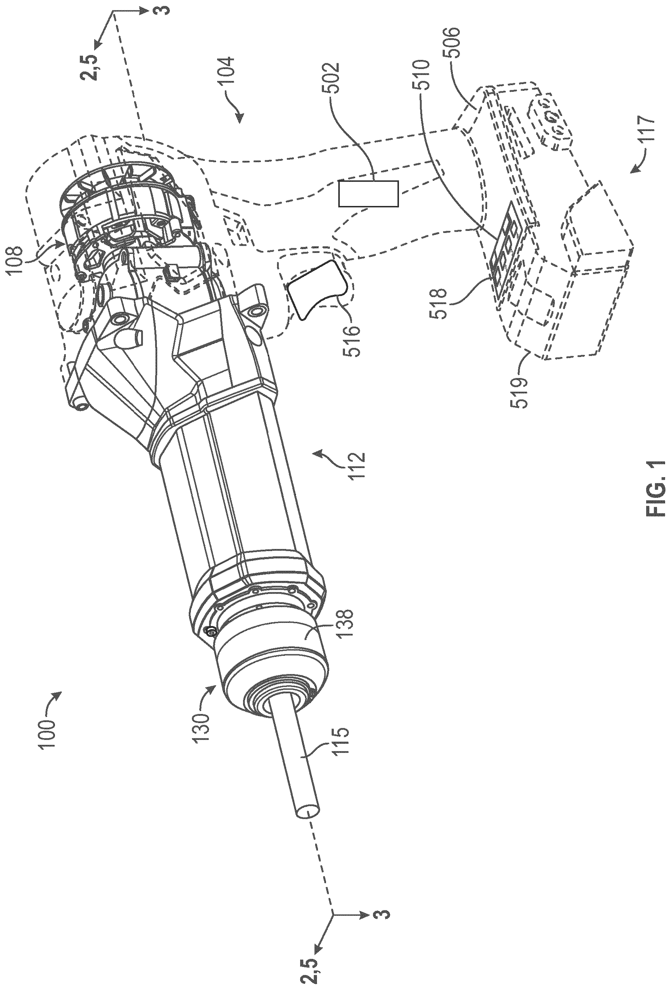

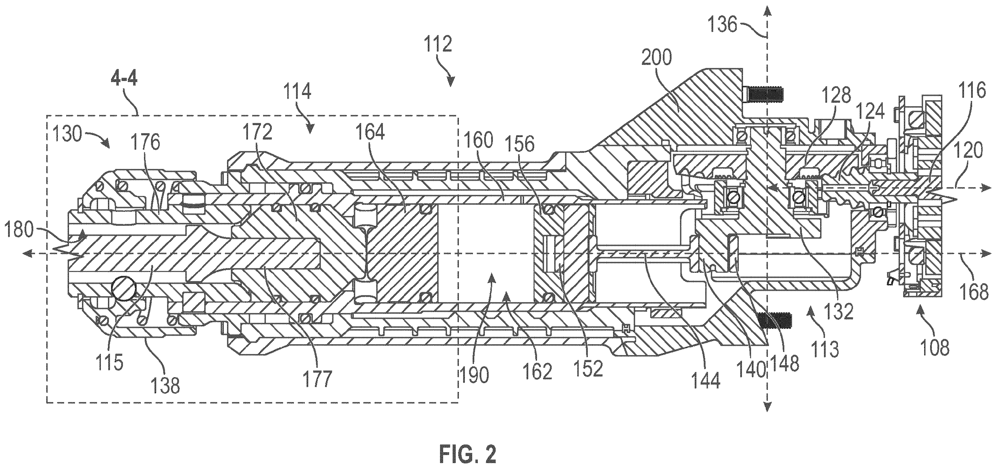

Examples of the disclosed technology can be implemented on any variety of power tools that operate with removable bits. In particular, some examples may be used with impact drivers, including chisel hammers, rotary hammers or other known implementations. In this regard, for example, FIG. 1-3 illustrate a power tool 100 in the form of a hammer tool (e.g., a chisel hammer), however the concepts described herein can also be applied to other types of power tool. The power tool 100 includes a housing 104 and an electric motor 108 disposed within the housing 104. The power tool 100 can further include a reciprocation drive assembly 113 (shown in FIG. 2) coupled to the motor 108 for converting torque from the motor 108 (e.g., as the motor 108 rotates about a motor axis 120) to reciprocating motion. In some examples, the reciprocation drive assembly 113 can be coupled to the motor 108 via a transmission 112. An impact mechanism 114 (e.g., a percussion mechanism) can be coupled to the reciprocation drive assembly 113 to impart repeating axial impacts on a tool bit 115 (e.g., a chisel bit or an output tool). As shown in FIG. 1, the tool bit 115 may be slidably supported by a tool holder 130 coupled to the housing 104 so that the tool bit 115 is permitted to translate along its axis to impart the axial impacts to a work piece. In the illustrated example, the power tool 100 includes a quick-connect mechanism 138 coupled to the tool holder 130 to facilitate quick removal and replacement of different tool bits 115. In other applications, other types of chucks can be used in place of the quick connect mechanism 138, as may allow for tooled or toolless bit changes.

In some cases, the housing 104 includes different pieces that support different parts of the power tool 100. For example, the housing 104 can include a pair of clamshell halves that provide an outer cover for the power tool 100. In some cases, the housing 104 can include a gear case 200 that houses one or more of the transmission 112, the reciprocation drive assembly 113, or the impact mechanism 114.

Continuing, in the illustrated example of the power tool 100, the motor 108 can be configured as a direct-current (DC) motor 108 that receives power from an on-board power source (e.g., a battery pack 506). The housing 104 can define a battery receptacle 117 that detachably receives the battery pack 506. The battery pack 506 may include any of a number of different nominal voltages (e.g., 12V, 18V, etc.), and may be configured having a Lithium-based chemistry (e.g., Lithium, Lithium-ion, etc.) or any other suitable chemistry. Alternatively, the motor 108 may be powered by a remote power source (e.g., a household electrical outlet) through a power cord or the motor 108 can be a different type of motor, such as an alternating-current (AC) motor. The motor 108 is selectively activated by depressing a trigger 516 (e.g., an actuator) which, in some cases, may activate an internal switch. The switch may be electrically connected to the motor 108 via a top-level or master controller 502 (e.g., a microcontroller, an electronic controller), or one or more circuits, for controlling operation of the motor 108. Further, a user interface 510 can be provided to selectively operate the motor 108 based on a desired speed or a desired mode of the power delivery from the motor 108. For example, a mode selector 518 (e.g., a user interface, switch, dial, etc.) can be arranged for a user to provide a command for the motor 108. In some cases, the mode selector 518 can be arranged at a base 519 (e.g., a foot) of the power tool 100. In particular, the mode selector 518 can be arranged on a side of the base 519 that is opposite of the battery receptacle 117 or the battery pack 506. In some cases, the mode selector 518 can be provided separate from the power tool 100.

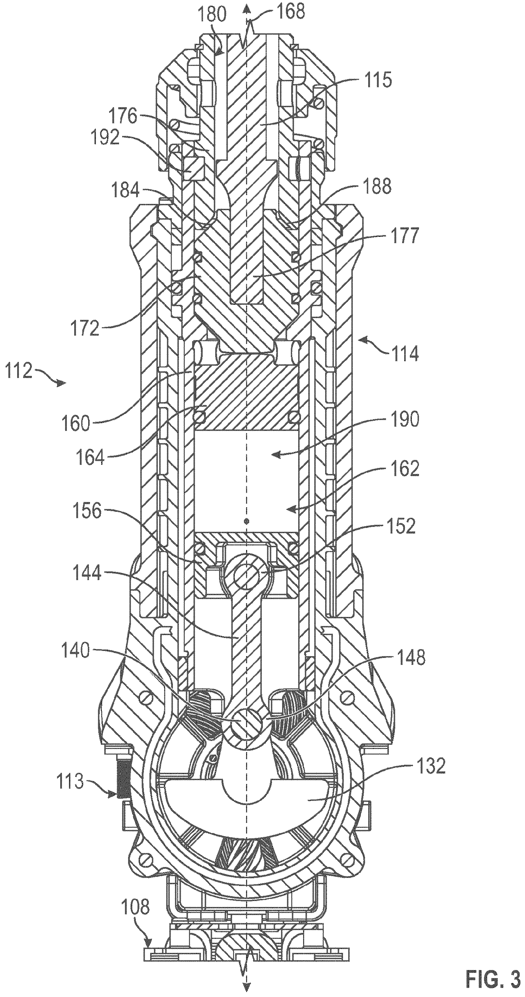

With continued reference to FIGS. 2 and 3, a reciprocation drive assembly can be configured to convert rotational motion of a motor (e.g., via a transmission) into reciprocating linear motion of a piston. In the illustrated example, the reciprocation drive assembly 113 includes a crankshaft 132, a reciprocating piston 156, and a connecting rod 144. The connecting rod 144 is connected to the crankshaft 132 at a first end 148 and a second end 152 that is opposite the first end 148. In some cases, the connecting rod 144 can be pivotably coupled to the crankshaft 132 at each of the first end 148 and the second end 152. The crankshaft 132 is configured to receive torque from the motor 108 and rotate about a crankshaft axis 136. In the illustrated example, the crankshaft 132 includes a crank pin 140 that couples to the first end 148 of the connecting rod 144, which can be coupled to the piston 156 at the second end 152. Correspondingly, as the crankshaft 132 rotates about the crankshaft axis 136, the connecting rod 144 drives the piston 156 to reciprocate along the reciprocation axis 168 and within the spindle 160 supported within the housing 104. In the illustrated example, the spindle 160 is stationary. However, in other examples, such as rotary hammers, the spindle 160 can be rotated by the motor 108 to cause rotation of a tool bit.

In some embodiments, the reciprocation drive assembly 113 can be realized by other mechanisms, including those known in the art to convert rotational motion to reciprocating motion (e.g., a scotch-yoke mechanism, a wobble drive mechanism, a swash plate mechanism, etc.). In this regard, although the various tool holders discussed below may be utilized in combination with the illustrated reciprocation drive assembly 113, various other implementations are also possible.

A reciprocation assembly moves to generate impact to a tool bit via an impact mechanism. That is, the impact mechanism moves in response to movement of the reciprocation assembly to impact a tool bit. In the illustrated example, the impact mechanism 114 includes a striker 164 and an anvil 172 that are moveably received in a spindle 160 (e.g., a barrel). The striker 164 is positioned between the piston 156 and the anvil 172 and selectively reciprocates within the spindle 160 in response to reciprocation of the piston 156. The anvil 172, which engages the tool bit 115, is impacted by the striker 164 when the striker 164 reciprocates toward the tool bit 115. The impact between the striker 164 and the anvil 172 can be transferred to the tool bit 115, causing the anvil 172 to reciprocate along with the tool bit 115 performing work on a work piece (e.g., impact a workpiece). In the illustrated example, the anvil 172 includes an inner bore 174 that receives a shank 177 of the tool bit 115. Further, in the illustrated construction of the power tool 100, the spindle 160 is hollow and defines an interior chamber 162 (e.g., a bore) in which the striker 164 is received. An air spring 190 (e.g., an air pocket or an air cushion) can be formed between the piston 156 and the striker 164 when the piston 156 reciprocates within the spindle 160, whereby expansion and contraction of the air spring 190 induces reciprocation of the striker 164. That is, as the piston 156 moves towards the striker 164, the volume of the air spring 190 is reduced, which increases pressure within the air spring 190. This increase in pressure can be sufficient to move the striker 164 in the same direction as piston 156 and cause the striker 164 to impact the anvil 172 to deliver an impact to a workpiece via the tool bit 115. Conversely, as the piston 156 moves away from the striker 164, the volume of the air spring 190 can increase, which reduces pressure within the air spring 190. This reduction in pressure can be sufficient to move the striker 164 in the same direction as piston 156, causing the striker 164 to retract and move away from the anvil 172.

In some non-limiting cases, the motor 108 can be positioned within the housing 104 (e.g., within a gearcase disposed within the housing 104), and the spindle 160 can be coupled to the housing 104. In some non-limiting cases, the motor 108 can be positioned within the housing 104, the spindle 160 can be rotatable. For example, the transmission 112 between the motor 108 and the spindle 160 can transmit torque from the motor 108 to the spindle 160, causing the spindle 160 to rotate when the motor 108 is activated. The transmission 112 can include a geartrain, although other types of transmission systems can be used, for example, belt drives, chain drives, etc.

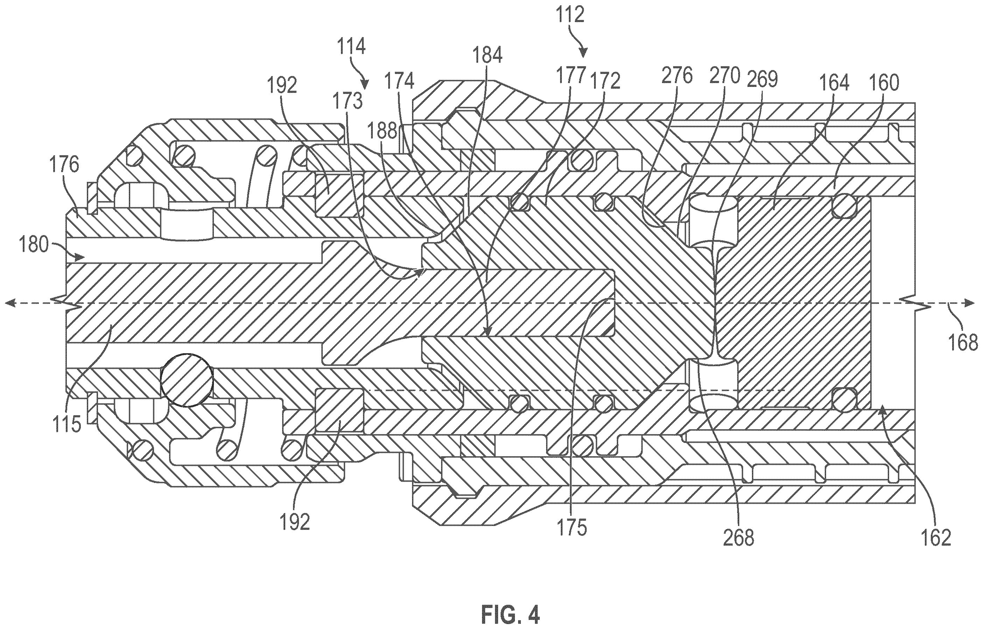

With specific reference to FIG. 4, the power tool 100 includes retainment features that guide an axial movement of the anvil 172 along the reciprocation axis 168. For example, as shown in FIG. 4, a retainer 176 is provided at a distal end of the spindle 160. The retainer 176 defines a bore 180 (e.g., a cylindrical bore) that can receive the tool bit 115. In the illustrated example, the retainer 176 is coupled to the spindle 160 via fasteners (e.g., fasteners or retention members). The retainer 176 defines a retainer impact surface 188 that can engage with a corresponding surface of the anvil 172. In the illustrated example, the anvil 172 defines a front anvil impact surface 184 that generally faces toward a front of the power tool 100 (e.g., toward the tool holder). When the anvil 172 moves toward the front of the power tool 100 along the reciprocation axis 168, the retainer impact surface 188 can engage with the front anvil impact surface 184 and stop a further movement of the anvil 172 toward the front of the power tool 100. Further, the anvil 172 is configured to engage with the spindle 160 during the reciprocation motion of the power tool 100. For example, as shown in FIG. 4, the anvil 172 defines a rear anvil impact surface 268 located at a rear end of the anvil 172, generally opposite from the front anvil impact surface 184. The rear anvil impact surface 268 includes a first rear surface 269 that can (directly) engage with the striker 164 during the reciprocation motion and a second rear surface 270 that can engage with the spindle 160 (e.g., a spindle impact surface 276). Accordingly, when the anvil 172 moves toward the rear of the power tool 100 along the reciprocation axis 168, the spindle impact surface 276 can engage with the second rear surface 270 and stop a further movement of the anvil 172 toward the rear of the power tool 100.

In some configurations, the retainer 176 or the spindle 160 can absorb an impact force exerted by the striker 164 to the anvil 172 along the reciprocation axis 168 when the anvil 172 contacts the retainer 176 or the spindle 160 directly or indirectly. For example, repeated impacts by the striker 164 to the anvil 172 can cause the anvil 172 to reciprocate between the retainer 176 and the spindle 160. When the anvil 172 impacts the retainer 176, the impact force can be absorbed by the spindle 160 that is coupled to the anvil 172 via the retention members 192.

In these circumstances, the retainer 176 and the spindle 160 can provide impact absorbing features that absorb at least portion of the impact force exerted by the striker 164 or the reactionary force exerted by a workpiece during operation. For example, when the anvil 172 moves back toward the spindle 160, the rear anvil impact surface 268 can contact the spindle impact surface 276. The impact force can be transmitted to the spindle 160, dissipating the force through the spindle 160. When the anvil 172 moves forward toward the retainer 176, the front anvil impact surface 184 can contact the retainer impact surface 188. The impact force exerted by the striker 164 can be transmitted to the anvil 172, and the transmitted impact force can be subsequently transmitted to the retainer 176 and the spindle 160 via the retention members 192. Correspondingly, the impact force exerted by the striker 164 can be dissipated by directing the force to the spindle 160 or other parts of the power tool 100.

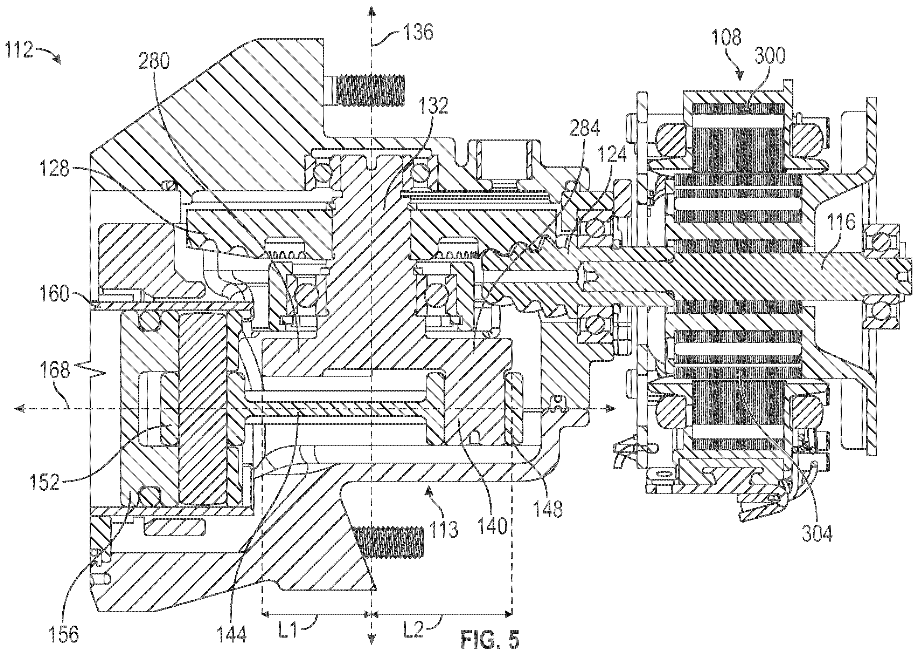

FIG. 5 illustrates the motor 108, the transmission 112, and the reciprocation drive assembly 113 in greater detail. In particular, the crankshaft 132 includes a counterweight 280 and a crank 284 that includes the crank pin 140. The counterweight 280 can be defined by a distance L1 (e.g., a radial distance) that is measured along a direction of the reciprocation axis 168 between the crankshaft axis 136 and a first distal edge of the counterweight 280. The crank 284 can further be defined by a distance L2 (e.g., a radial distance) that is measured along the direction of the reciprocation axis 168 between the crankshaft axis 136 and a second distal edge of the counterweight 280, on a side that includes the crank 284. In the illustrated example, the distance L1 of the counterweight 280 is shorter than the distance L2 of the crank 284. In some cases, the shorter distance L1 can permit the counterweight 280 to avoid contact with the piston 156 when the piston 156 is at a fully retracted position (e.g., at a bottom dead center position, as shown in FIG. 5). In some cases, the larger distance L2 of the crank 284 can increase a crank radius of the crank pin 140. However, the illustrated example provides an arrangement of the crank 284, such that the crank 284 can be arranged closer to the transmission 112 or be rotated away from the piston 156 at the bottom dead center position without an interference with the piston 156, the spindle 160, or other parts of the transmission 112.

Further, as shown in FIG. 5, the motor 108 includes a stator 300 and a rotor 304. In the illustrated example, the stator 300 is supported by the housing 104 and held stationary relative to the housing 104. The rotor 304 is arranged on the motor shaft 116 (e.g., via press fit or nominal interference fit) and rotates with the motor shaft 116 relative to the stator 300. In particular, the motor 108 can be an electric motor, such as a DC brushless motor, although other types of motors can be used to produce power.

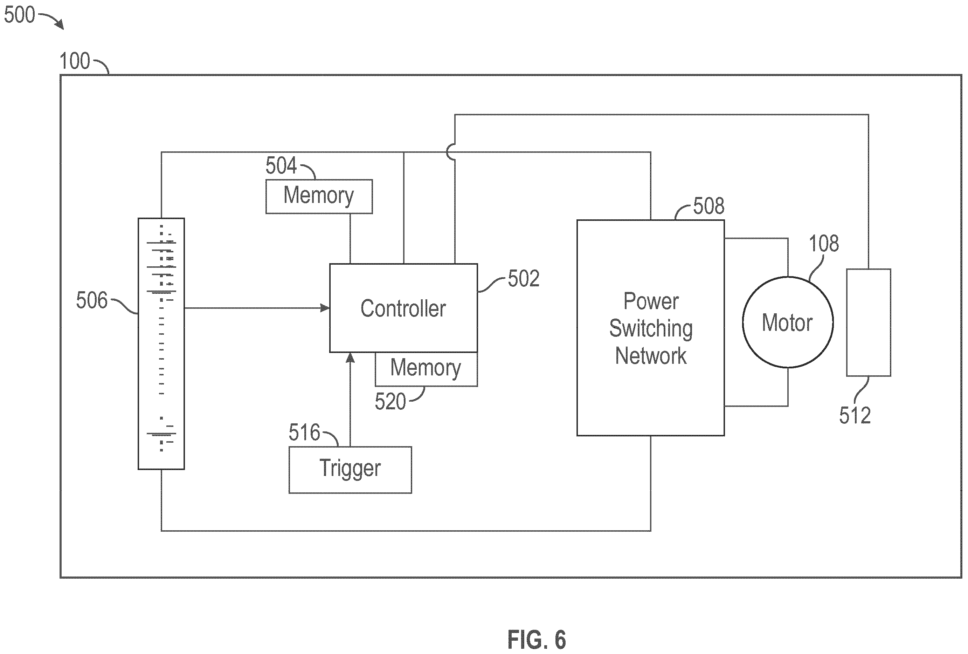

FIG. 6 illustrates an example control system 500 that can be implemented on a power tool such as the power tool 100 of FIGS. 1-5, or other power tools. The control system 500 generally refers to the power tool 100 of FIGS. 1-5 for brevity, but the concepts described herein can also be applied to other types of power tools.

In particular, the power tool 100 can include electronic components that control the motor 108 during operation of the power tool 100. As illustrated in FIG. 6, the power tool 100 includes the control system 500 that includes the electronic controller 502, a memory 504, the battery pack 506, a power switching network 508 (e.g., field-effect transistors or FETs), a rotor position sensor 512, and an input device including the trigger 516 (e.g., as also shown in FIG. 1). In some embodiments, the electronic controller 502 can be implemented as a microprocessor with a separate memory (e.g., the memory 504). In other embodiments, the electronic controller 502 may be implemented as a microcontroller (e.g., including a second memory 520 on the same chip, such as an on-chip memory). In other embodiments, the electronic controller 502 may be implemented using multiple processors. In addition, the electronic controller 502 may be implemented partially or entirely as, for example, a Field Programmable Gate Array (FPGA), an Application-Specific Integrated Circuit (ASIC), an Application-Specific Standard Products (ASSP), a configurable processor, a Central Processing Unit (CPU), or a Graphics Processing Unit (GPU), etc., and the memory 504 may not be needed or may be modified accordingly based on the implementations. In some cases, the memory 504 can store instructions executed by the electronic controller 502 to carry out functions of the power tool 100 as described above. In some embodiments, the memory 504 can include Read-Only Memory (ROM), random access memory (RAM), other non-transitory computer-readable media, or a combination thereof.

Further, the power switching network 508 enables the electronic controller 502 to control the operation of the motor 108, such as a speed or direction of the motor 108. For example, when the trigger 516 is in an activated position (e.g., depressed), electrical current is supplied from the battery pack 506 to the motor 108, via the power switching network 508. When the trigger 516 is in an inactivated position (e.g., released or not depressed), electrical current is not supplied from the battery pack 506 to the motor 108. In some embodiments, the amount in which the trigger 516 is depressed is related to or corresponds to a desired speed of rotation of the motor 108 (e.g., a closed loop speed control). For example, a position of the trigger 516 between the activated position and the deactivated position can correspond to an amount of electrical current that is supplied from the battery pack 506 to the motor 108.

In response to the electronic controller 502 receiving a signal (e.g., a drive request signal) from the trigger 516, the electronic controller 502 activates the power switching network 508 to provide power to the motor 108. Through the power switching network 508, the electronic controller 502 controls the amount of current available to the motor 108 and thereby controls the speed and torque output of the motor 108. The power switching network 508 includes a plurality of FETs, for example, a six-FET bridge that receives pulse-width modulated (PWM) signals from the electronic controller 502.

With continued reference to FIG. 6, various sensors can be provided to collect motor feedback information or determine positions of one or more parts of the motor 108. For example, the rotor position sensor 512 can be provided to track movement of the rotor 304. In particular, the rotor position sensor 512 is connected to the electronic controller 502 or in electrical communication with the electronic controller 502. In some cases, the rotor position sensor 512 can include a plurality of Hall-effect sensors, a quadrature encoder, or rotary encoder, etc. that are attached to the motor 108. In some embodiments, the rotor position sensor 512 outputs motor feedback information to the electronic controller 502, such as an indication (e.g., a signal, a pulse, etc.), when a magnet of the rotor 304 of the motor 108 rotates across the face of a Hall sensor. Based on the motor feedback information from the rotor position sensor 512, the electronic controller 502 can determine the position, velocity, or acceleration of the rotor 304. In response to the motor feedback information and the signals from the trigger 516, the electronic controller 502 transmits control signals to control the power switching network 508 to drive the motor 108. For instance, by selectively enabling and disabling the FETs of the power switching network 508, power received from the battery pack 506 is selectively applied to the stator windings of the motor 108 (e.g., in a cyclic manner) to cause rotation of the rotor 304 of the motor 108.

In some examples, positions of the motor 108 can be determined without sensors such as a Hall sensor. In some embodiments, the motor 108 is a sensor-less motor that does not include sensors including Hall-effect sensors. In some cases, removing the Hall-effect sensors can provide the advantage of reducing the size of the motor package (e.g., to save space within the housing 104). In these embodiments, the rotor position may be detected based on detecting the current, back electro-motive force (EMF), or the like, in the inactive phases of the motor 108. Specifically, sensors such as current sensors or voltage sensors may be provided in place of the Hall sensors, for example, in the power switching network 508 or on a current path between the power switching network 508 and the motor 108. The permanent magnets of the rotor 304 generate a back EMF in the inactive phases, as the rotor 304 moves past the stator phase coils. The electronic controller 502 detects the back EMF (e.g., using a voltage sensor) or the corresponding current (e.g., using a current sensor) generated in the inactive phase to determine the position of the rotor 304. The motor 108 is then commutated (e.g., by switching currents or voltages to desired phases of the motor 108) similarly as described above based on the position information of the rotor 304. Accordingly, the motor 108 may generate a signal that can be received and used by the electronic controller 502 to determine speed of the motor 108 without Hall sensors acting as a quadrature encoder. In some cases, constant power control circuitry may be used to minimize the impact in speed based on a charge level of the battery pack 506 (e.g., when a state-of-charge of a battery decreases). In some cases, the motor 108 (e.g., without a Hall sensor) may include an initialization rotor alignment routine which can be performed when starting the rotor 304 to determine the position of the rotor 304 before commutating.

Further, the motor feedback information is used by the electronic controller 502 to ensure proper timing of transmitting control signals to the power switching network 508 and to provide closed-loop feedback to control the speed of the motor 108 to be at a desired level (e.g., at a constant speed, a maximum speed, a minimum speed, or a variable speed such as a periodically accelerating or decelerating speed). Specifically, the electronic controller 502 can increase or decrease a duty ratio of the PWM signals provided to the power switching network 508 to control the speed of the motor 108 based upon signals from the trigger 516.

For example, the electronic controller 502 may control the power switching network 508 to maintain or limit the speed of the motor 108 at a predetermined speed (e.g., a speed selected by the trigger 516). In an example embodiment, as the load on the motor 108 increases, the speed of the motor 108 may begin to decrease. The electronic controller 502 detects the decrease in speed using the rotor position sensor 512, back EMF sensors, or without external sensors. To adjust the speed of the motor 108 or maintain to the selected speed, the electronic controller 502 (e.g., proportionally, intermittently, gradually, etc.) increases the duty ratio of the PWM signals provided to the power switching network 508 (and thereby, the electrical power provided to the motor 108). Similarly, when the load on the motor 108 decreases, the speed of the motor 108 may increase. The electronic controller 502 detects the increase in speed using the rotor position sensor 512, back EMF sensors, or without external sensors. Correspondingly, the electronic controller 502 (e.g., proportionally, intermittently, gradually, etc.) decreases the duty ratio of the PWM signals provided to the power switching network 508 (and thereby, the electrical power provided to the motor 108) to decrease the speed back down to the selected speed. Such operation of the electronic controller 502 may be continuous when the power tool 100 is operated.

In some cases, a position of the rotor 304 can be used to control a speed of the motor 108. For example, the electronic controller 502 is operable to receive the sensed position of the rotor 304 and to commutate the electric motor 108 according to the sensed position. Additionally, or alternatively, the electronic controller 502 is operable to receive the sensed speed of the rotor 304 and to adjust the amount of power provided to the electric motor 108 in the manner described above such that the motor 108 is driven at a desired speed. As the speed of the electric motor 108 is maintained at the desired speed, an impact frequency of the striker 164 against the anvil 172 is maintained, and the reciprocating motion of the striker 164 is maintained in synchronization with reciprocation of the piston 156.

In some embodiments, the power tool 100 can be operated at different motor speeds (e.g., discrete motor speeds). For example, the power tool 100 can be operable at two or more different constant motor speeds which can be selected by the user according to the user's needs. As the electronic controller 502 controls the power switching network 508 to adjust the power supplied to the electric motor 108 according to the methods described herein, the motor 108 can be operated at a first constant speed. When the motor 108 is operated at the first constant speed, the impact mechanism 114, including the striker 164 and the anvil 172, delivers axial impacts to the workpiece (via the tool bit 115) at a first impact frequency corresponding to the first constant speed of the motor 108. The first constant speed of the motor 108 also corresponds to a first average impact energy generated by the impact mechanism 114 (with each impact of the striker 164 against the anvil 172) and delivered to the workpiece (via the tool bit 115). When the motor 108 is operated at a second constant speed that is greater than the first constant speed, the impact mechanism 114 delivers axial impacts to the workpiece at a second impact frequency that is greater than the first impact frequency produced by the first constant speed. Likewise, the second constant speed corresponds to a second average impact energy generated by the impact mechanism 114 which is greater than the first average impact energy. The power tool 100 can be further operable at additional different motor speeds to adjust the impact frequency and the impact energy produced by the impact mechanism 114 according to the particular needs of the user. For example, the power tool 100 can operate at three or more different motor speeds, four or more different motor speeds, five or more different motor speeds, six or more different motor speeds, etc. In some cases, three or more different motor speeds can be set at a predetermined interval. In some cases, different motor speeds can be associated with particular functions of the power tool 100 (e.g., demolition, grooving, cutting, sculpting, etc.). In some cases, selecting a mode of the motor 108 can be independent of selecting a discrete motor speed. For example, selecting the mode of the motor 108 can be associated with selecting a desired average impact energy generated by the impact mechanism 114 per stroke.

In the embodiment shown in FIG. 6, the speed of the motor 108 can be determined based upon an input from the trigger 516 to the electronic controller 502. For example, the trigger 516 can be pressed to a first position which corresponds to the first constant speed of the motor 108. The trigger 516 can be further pressed to a second position, beyond the first position (e.g., toward the housing 104), which corresponds to the second constant speed of the motor 108. The electronic controller 502 can determine the motor speed based upon the input signal from the trigger 516 and, in response, control the power switching network 508 to maintain the motor 108 at the first constant speed or the second constant speed.

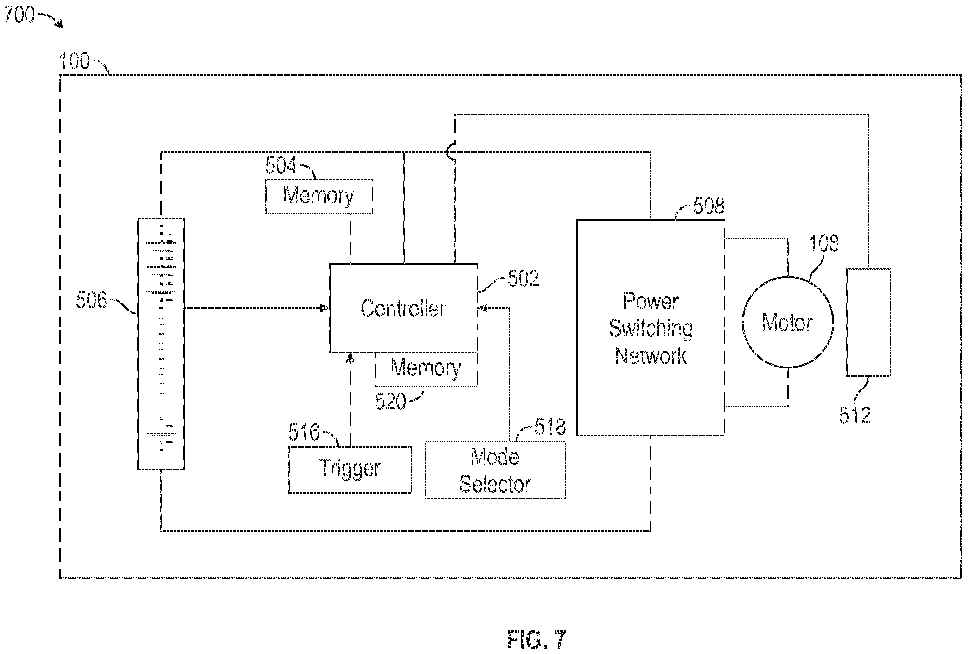

FIG. 7 illustrates an example control system 700 which is a particular example of the control system 500 of FIG. 6. To that end, features of the control system 700 described below similarly include reference numbers that generally refer to FIGS. 1-5 for brevity, and discussion above applies to similar named or numbered items below, unless otherwise noted or required.

With reference to FIG. 7, in another embodiment, the power tool 100 can include, in addition to the features described herein with respect to FIG. 6, another input device in the form of the mode selector 518. The mode selector 518 can include a user input mechanism separate from the trigger 516 that is provided on the power tool 100 (e.g., see FIG. 1). For example, the mode selector 518 can include one or more switch assemblies, buttons, touch screens, touch pads, dials, slider switches, toggle switches, rotary switches, joysticks, gesture recognition interfaces, or other user input mechanisms supported on the housing 104 of the power tool 100. In some cases, the mode selector 518 can be an application executed on a separate electronic device (e.g., a mobile electronic device) that can receive user inputs and communicate signals to the power tool 100 (e.g., via a wireless connection).

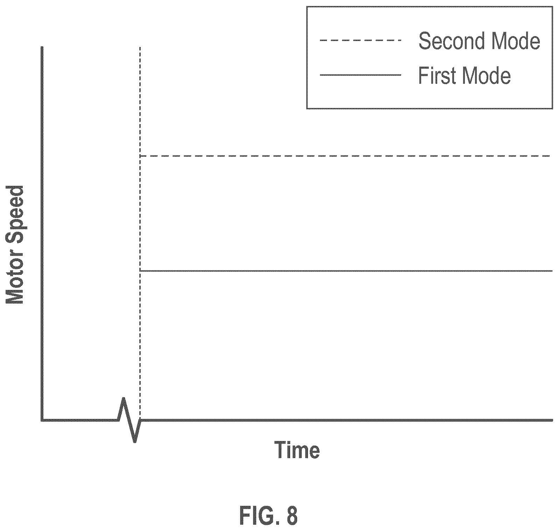

As illustrated in FIG. 8, a desired motor speed of the motor 108 can be selected via the mode selector 518. Based upon a signal from the mode selector 518 to the electronic controller 502, the electronic controller 502 can control the motor 108 to operate at the selected speed. For example, the trigger 516 can include an on/off functionality to activate or deactivate the motor 108, and the input to the mode selector 518 determines the motor speed. The mode selector 518 can be placed to different set points that correspond to a first operational speed (e.g., a first constant or maximum speed) that is associated with a first mode and a second constant speed (e.g., a second constant or maximum speed) that is associated with a second mode described herein, and can optionally include additional, different constant motor speed set points.

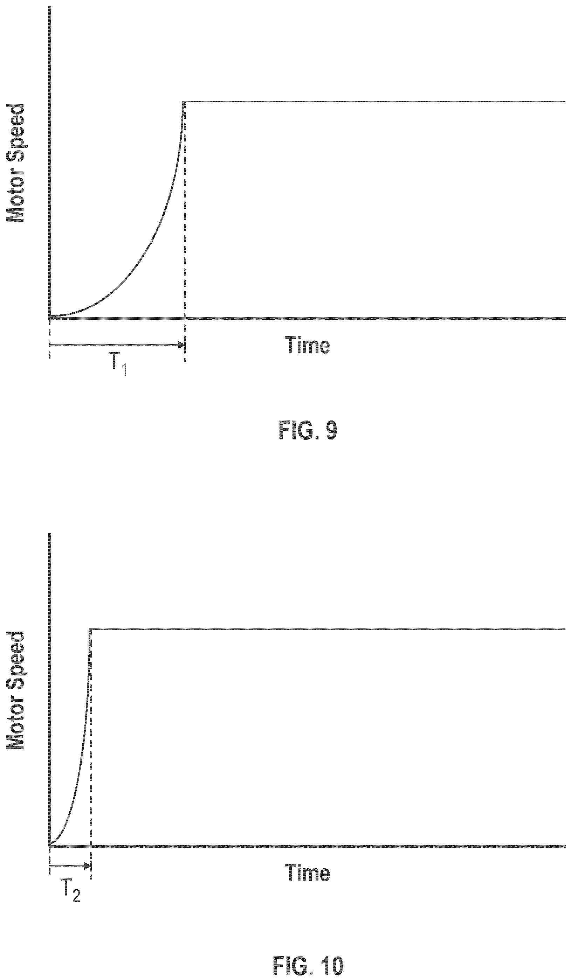

Further, in some embodiments, the mode selector 518 is further operable to select an acceleration rate of the motor 108 by which the motor 108 accelerates to a desired constant speed (e.g., a first constant speed or a second constant speed, as discussed in further detail below). As illustrated in FIG. 9, the mode selector 518 can be controlled (e.g., by a user) to set the motor 108 to a first acceleration rate. Based on an acceleration input signal from the mode selector 518, the electronic controller 502 can control the motor 108 to accelerate at the first acceleration rate up to a desired constant speed. The first acceleration rate corresponds to a first time interval T₁ over which the motor 108 reaches the desired constant speed after the trigger 516 is pressed. In some cases, the first constant speed or the second constant speed can be the first maximum speed or the second maximum speed, respectively. In some cases, the first mode can be associated with the first maximum speed or the first acceleration rate, and the second mode can be associated with the second maximum speed or the second acceleration rate.

As illustrated in FIG. 10, the mode selector 518 can be controlled to set a second acceleration rate at which the motor 108 accelerates to the desired constant speed. In some cases, the second acceleration rate may be greater than the first acceleration rate (e.g., as shown in FIG. 9). The second acceleration rate corresponds to a second time interval T₂ over which the motor 108 reaches the desired constant speed after the trigger 516 is pressed. The second time interval T₂ is shorter than the first time interval T₁. As such, the power tool 100 delivers impacts to the workpiece more quickly, or abruptly when the mode selector 518 is set to the second acceleration rate than when it is set to the first acceleration rate. In contrast, the power tool 100 delivers impact energy more quickly (i.e., near instantaneously) when the second acceleration rate is selected. In some cases, the acceleration rates of the motor 108 can be associated with an ease of maneuvering or controlling the power tool 100. For example, a slower acceleration rate can be useful for operating the power tool 100 with a greater control or delicacy. While the illustrated example includes the second acceleration rate that is greater than the first acceleration rate, the second acceleration rate may be less than the first acceleration rate in other embodiments.

The mode selector 518 can be further operable to select additional, different acceleration rates for the motor 108. In addition, the mode selector 518 can be operable to adjust both the acceleration rate and the motor speed (e.g., a constant or maximum motor speed) in combination.

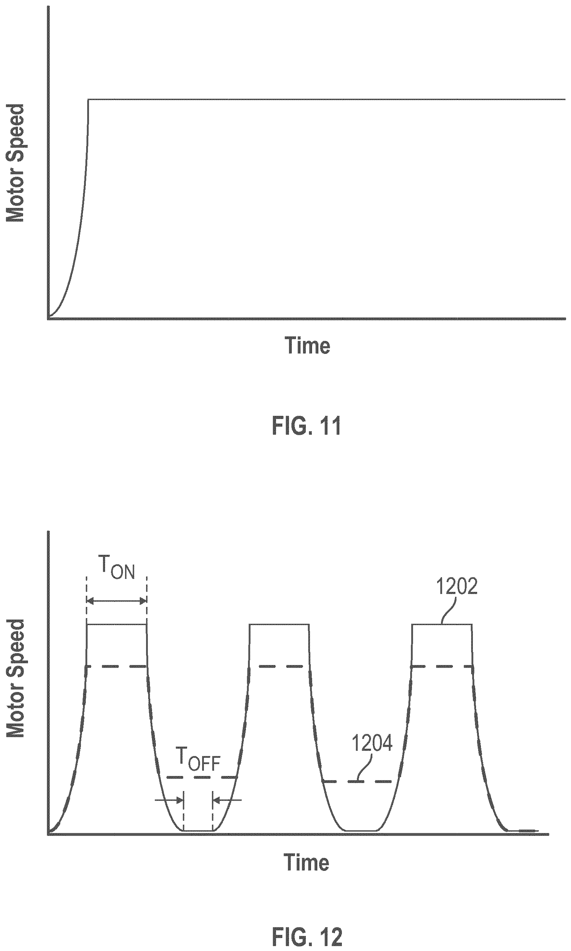

Referring to FIGS. 11 and 12, in some embodiments, the mode selector 518 is further operable to select an operational mode of the motor 108. For example, the with reference to FIG. 11, the mode selector 518 can be actuated by the user to set a normal mode (e.g., a first mode) of operation of the motor 108. In the normal mode, the electronic controller 502 controls the motor 108 to accelerate up to the desired constant speed which is subsequently maintained. This causes the impact mechanism 114 to deliver impacts to the workpiece (via the tool bit 115) at a relatively constant rate and impact energy. With reference to FIG. 12, the mode selector 518 can also be actuated by the user to set a burst mode (e.g., a second mode) of operation of the motor 108. In the burst mode, when the trigger 516 is actuated, the electronic controller 502 controls the motor 108 to repeatedly cycle on and off to deliver rapid bursts of impact energy to the workpiece (via the tool bit 115 and the impact mechanism 114). More specifically, the electronic controller 502 controls the motor 108 to switch between a first operational speed and a second operational speed. For example, the motor 108 can accelerate to a desired operational speed (e.g., a desired constant or maximum speed), maintain the constant speed for a first time period T_{ON}, decelerate to a stop, and remain stopped for a second time period T_{OFF} (e.g., as shown in line 1202). In some cases, the motor 108 can accelerate to the first speed for the first time period T_{ON} and decelerate to the second speed for the second time period T_{OFF} (e.g., as shown in line 1204). The cycle is then repeated until the trigger 516 is released. For example, the speed of the motor 108 can alternate between a faster speed for the first time period T_{ON} (e.g., 1 second, 2 seconds, 3 seconds, etc.) and a slower speed for the second time period T_{OFF} (e.g., 1 second, 2 seconds, 3 seconds, etc.). In some examples, the motor 108 can be on for the first time period T_{ON} (e.g., 1 second, 2 seconds, 3 seconds, etc.) and off for the second time period T_{OFF} (e.g., 1 second, 2 seconds, 3 seconds, etc.).

In some embodiments, the mode selector 518 may be further operable to adjust the cycle frequency of the burst mode to increase or decrease the time periods T_{ON} and T_{OFF}. In the illustrated example in FIG. 12, a value of the first time period T_{ON} is greater than a value of the second time period T_{OFF}. In other examples, the value of the first time period T_{ON} can be less than the value of the second time period T_{OFF} or the same. In some cases, the first time period T_{ON} and the second time period T_{OFF} can be adjusted according to user input or types of functions (e.g., chiseling, drilling, etc.) or working materials (e.g., wood, steel, etc.). In some cases, the burst mode can include a plurality of time periods T_{ON} or T_{OFF} that are of different values (e.g., a third time period T_{ON} that is different than the first time period T_{ON}). Further, the power tool 100 can include more than two modes, including three modes, four modes, five modes, six modes, etc. that are each associated with different on/off frequencies, magnitudes of speed, acceleration rates, etc.

In some embodiments, the mode selector can be operable to adjust any and all of the acceleration rate, the desired operational speed (e.g., a constant motor speed or a maximum speed), and the operation mode as described herein, alone or in combination.

In some implementations, devices or systems disclosed herein can be utilized, manufactured, or installed using methods embodying aspects of the invention. Correspondingly, any description herein of particular features, capabilities, or intended purposes of a device or system is generally intended to include disclosure of a method of using such devices for the intended purposes, a method of otherwise implementing such capabilities, a method of manufacturing relevant components of such a device or system (or the device or system as a whole), and a method of installing disclosed (or otherwise known) components to support such purposes or capabilities. Similarly, unless otherwise indicated or limited, discussion herein of any method of manufacturing or using for a particular device or system, including installing the device or system, is intended to inherently include disclosure, as embodiments of the invention, of the utilized features and implemented capabilities of such device or system.

Also as used herein, unless otherwise limited or defined, "or" indicates a non-exclusive list of components or operations that can be present in any variety of combinations, rather than an exclusive list of components that can be present only as alternatives to each other. For example, a list of "A, B, or C" indicates options of: A; B; C; A and B; A and C; B and C; and A, B, and C. Correspondingly, the term "or" as used herein is intended to indicate exclusive alternatives only when preceded by terms of exclusivity, such as "either," "one of," "only one of," or "exactly one of." For example, a list of "one of A, B, or C" indicates options of: A, but not B and C; B, but not A and C; and C, but not A and B. A list preceded by "one or more" (and variations thereon) and including "or" to separate listed elements indicates options of one or more of any or all of the listed elements. For example, the phrases "one or more of A, B, or C" and "at least one of A, B, or C" indicate options of: one or more A; one or more B; one or more C; one or more A and one or more B; one or more B and one or more C; one or more A and one or more C; and one or more of A, one or more of B, and one or more of C. Similarly, a list preceded by "a plurality of' (and variations thereon) and including "or" to separate listed elements indicates options of multiple instances of any or all of the listed elements. For example, the phrases "a plurality of A, B, or C" and "two or more of A, B, or C" indicate options of: A and B; B and C; A and C; and A, B, and C.

Also as used herein, unless otherwise defined or limited, directional terms are used for convenience of reference for discussion of particular figures or examples or to indicate spatial relationships relative to particular other components or context, but are not intended to indicate absolute orientation. For example, references to downward, forward, or other directions, or to top, rear, or other positions (or features) may be used to discuss aspects of a particular example or figure, but do not necessarily require similar orientation or geometry in all installations or configurations.

Unless otherwise specifically indicated, ordinal numbers are used herein for convenience of reference, based generally on the order in which particular components are presented in the relevant part of the disclosure. In this regard, for example, designations such as "first," "second," etc., generally indicate only the order in which a thus-labeled component is introduced for discussion and generally do not indicate or require a particular spatial, functional, temporal, or structural primacy or order.

In some embodiments, aspects of the invention, including computerized implementations of methods according to the invention, can be implemented as a system, method, apparatus, or article of manufacture using standard programming or engineering techniques to produce software, firmware, hardware, or any combination thereof to control a processor device (e.g., a serial or parallel general purpose or specialized processor chip, a single- or multi-core chip, a microprocessor, a field programmable gate array, any variety of combinations of a control unit, arithmetic logic unit, and processor register, and so on), a computer (e.g., a processor device operatively coupled to a memory), or another electronically or operated controller to implement aspects detailed herein. Accordingly, for example, embodiments of the invention can be implemented as a set of instructions, tangibly embodied on a non-transitory computer-readable media, such that a processor device can implement the instructions based upon reading the instructions from the computer-readable media. Some embodiments of the invention can include or utilize a control device (or controller) such as an automation device, a special purpose or general purpose computer including various computer hardware, software, firmware, and so on, consistent with the discussion below. As specific examples, a control device can include a processor, a microcontroller, a field-programmable gate array, a programmable logic controller, logic gates etc., and other typical components that are known in the art for implementation of appropriate functionality (e.g., memory, communication systems, power sources, user interfaces and other inputs, etc.). In some embodiments, a control device can include a centralized hub controller that receives, processes and (re)transmits control signals and other data to and from other distributed control devices (e.g., an engine controller, an implement controller, a drive controller, etc.), including as part of a hub-and-spoke architecture or otherwise.

The term "article of manufacture" as used herein is intended to encompass a computer program accessible from any computer-readable device, carrier (e.g., non-transitory signals), or media (e.g., non-transitory media). For example, computer-readable media can include but are not limited to magnetic storage devices (e.g., hard disk, floppy disk, magnetic strips, and so on), optical disks (e.g., compact disk (CD), digital versatile disk (DVD), and so on), smart cards, and flash memory devices (e.g., card, stick, and so on). Additionally, it should be appreciated that a carrier wave can be employed to carry computer-readable electronic data such as those used in transmitting and receiving electronic mail or in accessing a network such as the Internet or a local area network (LAN). Those skilled in the art will recognize that many modifications may be made to these configurations without departing from the scope or spirit of the claimed subject matter.

Certain operations of methods according to the disclosed technology, or of systems executing those methods, may be represented schematically in the FIGS. or otherwise discussed herein. Unless otherwise specified or limited, representation in the FIGS. of particular operations in particular spatial order may not necessarily require those operations to be executed in a particular sequence corresponding to the particular spatial order. Correspondingly, certain operations represented in the FIGS., or otherwise disclosed herein, can be executed in different orders than are expressly illustrated or described, as appropriate for particular examples of the disclosed technology. Further, in some examples, certain operations can be executed in parallel, including by dedicated parallel processing devices, or separate computing devices configured to interoperate as part of a large system.

As used herein in the context of computer implementation, unless otherwise specified or limited, the terms "component," "system," "module," "block," "device," and the like are intended to encompass part or all of computer-related systems that include hardware, software, a combination of hardware and software, or software in execution. For example, a component may be, but is not limited to being, a processor device, a process being executed (or executable) by a processor device, an object, an executable, a thread of execution, a computer program, or a computer. By way of illustration, both an application running on a computer and the computer can be a component. One or more components (or system, module, and so on) may reside within a process or thread of execution, may be localized on one computer, may be distributed between two or more computers or other processor devices, or may be included within another component (or system, module, and so on).

The previous description of the disclosed embodiments is provided to enable any person skilled in the art to make or use the invention. Given the benefit of this disclosure, various modifications to these embodiments will be readily apparent to those skilled in the art, and the principles defined herein may be applied to other embodiments without departing from the spirit or scope of the invention. Thus, the invention is not intended to be limited to the embodiments shown herein but is to be accorded the widest scope consistent with the principles and novel features disclosed herein.

## Claims

1. A power tool adapted to impart axial impacts to a tool bit, the power tool comprising:
a housing;
an electric motor supported in the housing;
an input device;
a reciprocation drive assembly coupled to the electric motor and configured to convert torque from the electric motor to reciprocating motion of a drive piston for reciprocation along a reciprocation axis;
a striker that reciprocates in response to reciprocation of the drive piston;
an anvil positioned between the striker and the tool bit, the anvil configured to transmit axial impacts from the striker to the tool bit; and
an electronic controller operably coupled to the electric motor and the input device, the electronic controller being operable to:
receive a first signal from the input device, the first signal indicating a first constant speed of the electric motor,
in response to the first signal, set an operational speed of the electric motor to the first constant speed,
receive a second signal from the input device, the second signal indicating a second constant speed of the electric motor that is greater than the first constant speed, and
in response to the second signal, set the operational speed of the electric motor to the second constant speed.

2. The power tool of claim 1, further comprising a speed sensor configured to detect the operational speed of the electric motor, wherein the electronic controller is operable to receive inputs from the speed sensor, and in response to the inputs, adjust the operational speed to maintain the first constant speed, and/or
wherein the input device comprises a trigger supported by the housing.

3. The power tool of claim 1, wherein the input device comprises a mode selector supported by the housing, and wherein the power tool further comprises a trigger supported by the housing.

4. The power tool of claim 3, wherein in response to a start signal from the trigger, the electronic controller is further configured to operate the electric motor at the first constant speed and at the second constant speed, and/or
wherein the electronic controller is further configured to:
receive a first mode selection from the mode selector,
according to the first mode selection, maintain a constant speed of the electric motor in response to a start signal from the trigger,
receive a second mode selection from the mode selector, and
according to the second mode selection, repeatedly cycle a motor speed of the electric motor between the constant speed and a stopped state in response to the start signal from the trigger.

5. The power tool of claim 1, wherein the input device comprises a mode selector supported by the housing, and wherein the electronic controller is further configured to:
receive a first acceleration selection from the mode selector, the first acceleration selection indicating a first acceleration rate of the electric motor,
in response to the first acceleration selection, set an operational acceleration rate of the electric motor to the first acceleration rate, the operational acceleration rate corresponding to a time period during which the electric motor is accelerated from a stopped state to a desired constant speed, and
receive a second acceleration selection from the mode selector, the second acceleration selection indicating a second acceleration rate of the electric motor that is greater than the first acceleration rate, and
in response to the second acceleration selection, set the operational acceleration rate of the electric motor to the second acceleration rate.

6. A power tool adapted to impart axial impacts to a tool bit, the power tool comprising:
a housing;
an electric motor supported in the housing;
a mode selector;
a reciprocation drive assembly coupled to the electric motor and configured to convert torque from the electric motor to reciprocating motion of a drive piston for reciprocation along a reciprocation axis;
a striker that reciprocates in response to reciprocation of the drive piston;
an anvil positioned between the striker and the tool bit, the anvil configured to transmit axial impacts from the striker to the tool bit; and
an electronic controller operably coupled to the electric motor and the mode selector, the electronic controller being operable to:
receive a first acceleration selection from the mode selector, the first acceleration selection indicating a first acceleration rate of the electric motor,
in response to the first acceleration selection, set an operational acceleration rate of the electric motor to the first acceleration rate, the operational acceleration rate corresponding to a time period during which the electric motor is accelerated from a stopped state to a desired constant speed,
receive a second acceleration selection from the mode selector, the second acceleration selection indicating a second acceleration rate of the electric motor that is greater than the first acceleration rate, and
in response to the second acceleration selection, set the operational acceleration rate of the electric motor to the second acceleration rate.

7. The power tool of claim 6, further comprising a speed sensor configured to detect an operational speed of the electric motor, wherein the electronic controller is operable to receive inputs from the speed sensor, and in response to the inputs, adjust the operational speed to maintain the desired constant speed.

8. The power tool of claim 6, further comprising a trigger supported by the housing.

9. The power tool of claim 8, wherein the electronic controller is further configured to:
receive a first signal from one of the mode selector and the trigger, the first signal indicating a first constant speed of the electric motor,
in response to the first signal, set an operational speed of the electric motor to the first constant speed,
receive a second signal from one of the mode selector and the trigger, the second signal indicating a second constant speed of the electric motor that is greater than the first constant speed, and
in response to the second signal, set the operational speed of the electric motor to the second constant speed.

10. The power tool of claim 6, wherein the electronic controller is further configured to:
receive a first mode selection from the mode selector,
according to the first mode selection, maintain a constant speed of the electric motor in response to a start signal from the trigger,
receive a second mode selection from the mode selector, and
according to the second mode selection, repeatedly cycle a motor speed of the electric motor between the constant speed and a stopped state in response to the start signal from the trigger.

11. A power tool adapted to impart axial impacts to a tool bit, the power tool comprising:
a housing;
an electric motor supported in the housing;
a mode selector;
a trigger;
a reciprocation drive assembly coupled to the electric motor and configured to convert torque from the electric motor to reciprocating motion of a drive piston for reciprocation along a reciprocation axis;
a striker that reciprocates in response to reciprocation of the drive piston;
an anvil positioned between the striker and the tool bit, the anvil configured to transmit axial impacts from the striker to the tool bit; and
an electronic controller operably coupled to the electric motor, the mode selector, and the trigger, the electronic controller being operable to:
receive a first mode selection from the mode selector,
according to the first mode selection, maintain a constant speed of the electric motor in response to a start signal from the trigger,
receive a second mode selection from the mode selector, and
according to the second mode selection, repeatedly cycle a motor speed of the electric motor between the constant speed and a stopped state in response to the start signal from the trigger.

12. The power tool of claim 11, further comprising a speed sensor configured to detect an operational speed of the electric motor, wherein the electronic controller is operable to receive inputs from the speed sensor, and in response to the inputs, adjust the operational speed to maintain the constant speed, and/or
wherein the electronic controller is further configured to:
receive a first signal from one of the mode selector and the trigger, the first signal indicating a first constant speed of the electric motor,
in response to the first signal, set an operational speed of the electric motor to the first constant speed,
receive a second signal from one of the mode selector and the trigger, the second signal indicating a second constant speed of the electric motor that is greater than the first constant speed, and
in response to the second signal, set the operational speed of the electric motor to the second constant speed.

13. The power tool of claim 11, wherein the electronic controller is further configured to:
receive a first acceleration selection from the mode selector, the first acceleration selection indicating a first acceleration rate of the electric motor,
in response to the first acceleration selection, set an operational acceleration rate of the electric motor to the first acceleration rate, the operational acceleration rate corresponding to a time period during which the electric motor is accelerated from a stopped state to a desired constant speed, and
receive a second acceleration selection from the mode selector, the second acceleration selection indicating a second acceleration rate of the electric motor that is greater than the first acceleration rate, and
in response to the second acceleration selection, set the operational acceleration rate of the electric motor to the second acceleration rate.

14. The power tool of claim 8 or 11, wherein the mode selector is supported by the housing.

15. The power tool of claim 6 or 11, wherein the anvil defines an opening and an inner bore that communicates with the opening, and wherein the inner bore at least partially receives a shank of the tool bit.
